# EUROPÄISCHE PATENTSCHRIFT

(11) **EP 3 222 861 B1**
(45) Veröffentlichungstag und Bekanntmachung des Hinweises auf die Patenterteilung: **08.01.2020**
(21) Anmeldenummer: 16000679.7
(22) Anmeldetag: 21.03.2016
(51) Int. Cl.: F16C 1/06, A01D 34/90, A01G 3/06, B27B 5/30, F16C 1/28, F02B 63/02, F16C 1/26

(54) **SCHUTZROHR ZUR LAGERUNG EINER ANTRIEBSWELLE EINES HANDGEFÜHRTEN ARBEITSGERÄTES**
PROTECTIVE TUBE FOR PROVIDING A BEARING FOR THE DRIVE SHAFT OF A HANDHELD TOOL
TUBE DE PROTECTION DESTINE A LOGER UN ARBRE D'ENTRAINEMENT D'UN APPAREIL DE TRAVAIL PORTATIF

(43) Veröffentlichungstag der Anmeldung: 27.09.2017
(73) Patentinhaber: Andreas Stihl AG & Co. KG, 71336 Waiblingen (DE)
(72) Erfinder: Föhrenbach, Jan, 70734 Fellbach (DE)
(74) Vertreter: Wasmuth, Rolf

(56) Entgegenhaltungen:
- DE-A1- 19 623 921
- DE-A1- 19 910 793
- GB-A- 1 579 203

## Beschreibung

Die Erfindung betrifft ein Schutzrohr mit einem inneren Lagerrohr zur Lagerung einer Antriebswelle eines handgeführten Arbeitsgerätes nach dem Oberbegriff des Anspruchs 1.

Ein gattungsgemäßes Schutzrohr ist aus der DE 196 23 921 A1 bekannt.

Aus der DE 38 39 548 C2 ist ein Lagerrohr (Liner) bekannt, dessen Lagerhülse über radiale Stützrippen in einem zylindrischen Schutzrohr gehalten ist. Das Lagerrohr soll eine schwingungsfreie, verschleißarme Lagerung der Antriebswelle gewährleisten, die einen Antrieb mit einem rotierenden Werkzeug verbindet. Eine derartige Antriebsverbindung kann mit Drehzahlen von bis 10.000 Umdrehungen arbeiten. Problematisch ist ein Mitdrehen des Lagerrohrs, weshalb in dieser Druckschrift vorgeschlagen ist, zumindest eine Stützrippe federnd auszubilden, um eine klemmende Fixierung des Lagerrohrs im Schutzrohr zu erzielen.

Die DE 199 10 793 A1 offenbart ein kreisrundes Führungsrohr mit einem von der Kreisform abweichenden Schaftende, in welches durch elastische Deformation das Drehlager für einen Werkzeugkopf eingesetzt ist.

Die GB 1 579 203 A offenbart ein kreisrundes Schutzrohr mit einem Lagerrohr, welches V-förmige Abstützrippen aufweist.

Der Erfindung liegt die Aufgabe zugrunde, eine in einem Schutzrohr geführte Antriebswelle mittels eines Lagerrohres derart zu lagern, dass ein Mitdrehen des Lagerrohres sicher unterbunden ist.

Die Aufgabe wird erfindungsgemäß nach den Merkmalen des Anspruchs 1 gelöst.

Das Schutzrohr hat einen von einer Kreisform abweichenden Rohrquerschnitt mit einer Innenkontur und einem Zentrum. Die Innenkontur des Rohrquerschnittes hat mindestens einen ersten Umfangsabschnitt mit einem kleinsten Abstand zum Zentrum und mindestens einen zweiten Umfangsabschnitt mit einem größten Abstand zum Zentrum. Zweckmäßig bestimmt der erste Umfangsabschnitt mit dem kleinsten Abstand zum Zentrum einen kleinsten Innendurchmesser und der zweite Umfangsabschnitt mit einem größten Abstand zum Zentrum einen größten Innendurchmesser. Zumindest ein Stützelement der Lagerhülse liegt mit einer Anlagefläche an der Innenkontur des Rohrquerschnitts an, wobei das Stützelement eine sich längs der Lagerhülse erstreckende Stützrippe umfasst, die einen als Lasche ausgebildeten Fortsatz mit einer Anlagefläche aufweist. Die Anlagefläche hat einen Abstand zum Zentrum des Rohrquerschnittes. Dabei ist der Abstand der Anlagefläche zum Zentrum größer als der kleinste Abstand des ersten Umfangsabschnitts zum Zentrum und kleiner oder gleich dem größten Abstands des zweiten Umfangsabschnitts zum Zentrum. Zweckmäßig liegt die Anlagefläche auf einem Durchmesserkreis um das Zentrum, wobei der Durchmesserkreis einen Durchmesser aufweist, der zwischen dem kleinsten und dem größten Innendurchmesser liegt.

Durch geeignete Wahl des Abstandes der Anlagefläche zum Zentrum kann ein Mitdrehen des Lagerrohrs sicher vermieden werden. Durch den gewählten Abstand wird in Drehrichtung der Antriebswelle eine formschlüssige Festlegung des Lagerrohres gegen Mitdrehen erreicht.

Zweckmäßig weist die Lagerhülse bezogen auf das Zentrum des Rohrquerschnitts zwei einander gegenüberliegende Stützelemente mit ersten Anlageflächen auf. Die ersten Anlageflächen weisen einen gleichen Abstand zum Zentrum des Rohrquerschnitts auf. Bezogen auf das Zentrum des Querschnitts der Lagerhülse enden zwei einander gegenüberliegende Stützelemente auf einem gemeinsamen Durchmesserkreis. Dadurch kann eine einfache Zentrierung der Lagerhülse innerhalb des Querschnitts des Schutzrohres erzielt werden. Vorteilhaft ist auch eine exzentrische Halterung des Lagerrohrs im Schutzrohr möglich. Hierzu können die Stützelemente z. B. mit unterschiedlicher Länge ausgeführt werden.

In vorteilhafter Weiterbildung der Erfindung liegt eine zweite Anlagefläche des Stützelementes im Bereich des zweiten Umfangsabschnitts an, der den größten Abstand zum Zentrum des Rohrquerschnitts aufweist. Die Anlagefläche kann sich in Axialrichtung des Lagerrohrs sowie in Umfangsrichtung des Lagerrohrs erstrecken. Ist die Erstreckung in Umfangsrichtung klein oder Null, so kommt es zu einer Linienanlage.

Das Schutzrohr weist vorteilhaft einen eckigen Rohrquerschnitt mit gerundeten Längskanten auf. Der Rohrquerschnitt kann ein polygonaler Querschnitt, insbesondere ein rechteckiger Querschnitt oder quadratischer Querschnitt oder auch ein ovaler Querschnitt sein. Die Stützelemente des Lagerrohres werden zweckmäßig entsprechend der Innenkontur des Querschnitts angeordnet. Zweckmäßig liegen die Stützelemente etwa im Bereich der gerundeten Längskanten. Der maximale Innendurchmesser der Innenkontur des Querschnitts kann durch die gerundeten Längskanten bestimmt sein. Ist der Durchmesser des Durchmesserkreises, auf dem die Stützelemente enden, kleiner als der maximale Innendurchmesser, ist ein leichtes axiales Einfädeln des Lagerrohrs in das Schutzrohr erzielt.

In Weiterbildung der Erfindung umfasst das Stützelement eine sich längs der Lagerhülse erstreckende Stützrippe, an deren freiem Längsrand seitlich eine Lasche anschließt, die eine sich in Umfangsrichtung der Lagerhülse erstreckende Breite aufweist. Mittels der Lasche kann eine elastisch vorgespannte Montage der Lagerhülse im Schutzrohr erzielt werden.

Die Lasche erstreckt sich zweckmäßig über vorzugsweise die gesamte axiale Länge der Stützrippe. Die sich in Umfangsrichtung erstreckenden Laschen zumindest zweier Stützrippen können in eine gleiche Drehrichtung weisen. Die Laschen erstrecken sich in eine gleiche Drehrichtung von der Stützrippe weg. Es kann zweckmäßig sein, dass zumindest zwei einander benachbarte Stützrippen Laschen aufweisen, die in Umfangsrichtung einander zugewandt sind, also aufeinander zu weisen.

Vorteilhaft ist die Anordnung des Lagerrohrs im Schutzrohr derart vorgesehen, dass die Laschen der Stützrippen zumindest teilweise in gerundeten Längskanten der Innenkontur des Querschnitts anliegen. Dabei liegen die Laschen vorteilhaft unter Vorspannung an der Innenkontur des Querschnitts an. Zweckmäßig liegt die Lasche zumindest teilweise flächig in einer gerundeten Längskante der Innenkontur an.

In Weiterbildung der Erfindung ist die an der Innenkontur anliegende Anlagefläche des Stützelementes an dem freien Längsrand der Stützrippe und/oder der Lasche und/oder an dem freien Längsrand der Lasche ausgebildet. Damit kann sich eine erste Anlagefläche durch das Ende der Stützrippe und eine zweite Anlagefläche durch die Lasche ergeben. Aufgrund der Gestaltung der Lasche ist deren Anlagefläche elastisch nachgiebig; die zweite Anlagefläche kann als weiche Anlagefläche bezeichnet werden. Die erste Anlagefläche ist am Längsrand der Stützrippe vorgesehen, die in radialer Abstützrichtung sehr steif ist; diese erste Anlagefläche kann als harte Anlagefläche bezeichnet werden.

Vorteilhaft liegt die Längsmittelachse der Lagerhülse mit seitlichem Abstand zu einer Längsmittelebene der Stützrippe. Dabei können die Stützrippen über den Außenumfang des Lagerrohrs mit gleichem Winkelabstand zueinander angeordnet sein; es kann zweckmäßig sein, über den Umfang die Stützrippen mit unterschiedlichen Winkelabständen zueinander anzuordnen.

Das erfindungsgemäße Lagerrohr zur Lagerung einer Antriebswelle in einem Schutzrohr besteht aus einer Lagerhülse und zumindest drei von der Lagerhülse abstehenden Stützelementen aus Stützrippen und Laschen. Eine Stützrippe schließt an die Lagerhülse an und erstreckt sich bis zu einem radial äußeren Längsrand, der einen Abstand zum Zentrum der Lagerhülse hat. Die Lasche schließt seitlich an den radial äußeren Längsrand der Stützrippe an und erstreckt sich mit einer Breite in Umfangsrichtung der Lagerhülse. Ein äußerer Punkt der Lasche besitzt einen maximalen Abstand zum Zentrum der Lagerhülse. Dieser Abstand ist größer als der Abstand des radial äußeren Längsrandes der Stützrippe zum Zentrum der Lagerhülse.

Vorteilhaft sind die Stützrippen derart angeordnet, dass der im Bogenmaß gemessene Abstand zwischen benachbarten Stützrippen unterschiedlich ist.

In vorteilhafter Weiterbildung der Erfindung liegen zwei Laschen einander benachbarter Stützrippen derart, dass sie aufeinander zu gerichtet sind.

Weitere Merkmale der Erfindung ergeben sich aus den weiteren Ansprüchen, der Beschreibung und der Zeichnung, in der Ausführungsbeispiele der Erfindung dargestellt sind. Es zeigen:
- Fig. 1: in schematischer Darstellung einen von einem Benutzer getragenen Freischneider mit einer in einem Schutzrohr geführten Antriebswelle,
- Fig. 2: einen Schnitt durch das Schutzrohr längs der Linie II-II in Fig. 1,
- Fig. 3: einen Schnitt durch das in Fig. 2 dargestellte Lagerrohr aus Lagerhülse und Stützrippen im unbelasteten Zustand,
- Fig. 4: eine isometrische Ansicht des Lagerrohrs nach Fig. 3,
- Fig. 5: einen Schnitt durch ein Schutzrohr in einer Darstellung gemäß Fig. 2 mit einem Lagerrohr in einer weiteren Ausführungsform,
- Fig. 6: einen Schnitt durch das in Fig. 4 dargestellte Lagerrohr im unbelasteten Zustand,
- Fig. 7: eine isometrische Ansicht des Lagerrohrs nach Fig. 6,
- Fig. 8: einen Schnitt durch eine dritte Ausführungsform eines Lagerrohrs vor einem Einbau in ein Schutzrohr,
- Fig. 9: einen Schnitt durch ein Schutzrohr mit einem eingebauten Lagerrohr nach Fig. 8,
- Fig. 10: einen Schnitt durch das Schutzrohr nach Fig. 9 mit einem unter Drehbelastung stehenden Lagerrohr nach Fig. 8,
- Fig. 11: einen Schnitt durch eine vierte Ausführungsform eines Lagerrohrs vor einem Einbau in ein Schutzrohr,
- Fig. 12: einen Schnitt durch ein Schutzrohr mit einem eingebauten Lagerrohr nach Fig. 11,
- Fig. 13: einen Schnitt durch das Schutzrohr nach Fig. 12 mit einem unter Drehbelastung stehenden Lagerrohr nach Fig. 11.

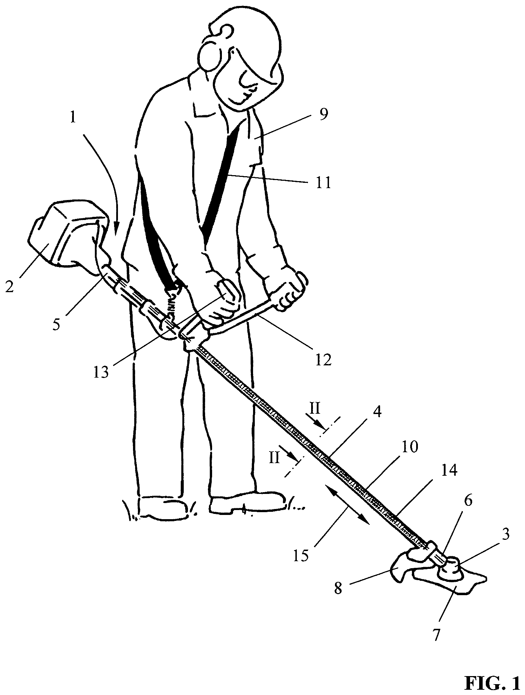

Das in Fig. 1 gezeigte Arbeitsgerät ist ein Freischneider 1, der im Wesentlichen aus einem Antrieb 2, einem Werkzeugkopf 3 und einem Schutzrohr 4 besteht. Der Freischneider 1 ist ein Beispiel eines Arbeitsgerätes mit einem geraden Schutzrohr 4; das Arbeitsgerät kann auch ein Hochentaster, ein Spezialernter, ein Heckenschneider oder dergleichen sein. Das Schutzrohr 4 kann auch ein gekrümmtes Schutzrohr sein.

Der Antrieb 2 ist an einem Ende 5 des Schutzrohres 4 befestigt, während der Werkzeugkopf 3 am anderen Ende 6 des Schutzrohrs 4 montiert ist. Im gezeigten Ausführungsbeispiel trägt der Werkzeugkopf 3 ein Werkzeug 7 nach Art eines Dickichtmessers; zum Schutz des Benutzers 9 ist im Bereich des unteren Endes 6 des Schutzrohrs 4 ein Prallschutz 8 gehalten. Je nach Werkzeugkopf kann das Werkzeug 7 beispielsweise auch eine Sägekette, ein Haken oder ein Messerbalken sein.

Im gezeigten Ausführungsbeispiel wird der Freischneider 1 mit einem Gurt 11 vom Benutzer 9 getragen; zumindest ein am Schutzrohr 4 angeordneter Griff, im Ausführungsbeispiel ein Lenkergriff 12, dient zum Halten und Führen des Arbeitsgerätes durch den Benutzer.

Der Griff kann hierbei am Schutzrohr 4 befestigt sein oder selbst durch einen Bereich des Schutzrohres 4 gebildet sein. Weist das Schutzrohr 4 einen von der Kreisform abweichenden Außenumfang auf, wird ein Formschluss zwischen Schutzrohr und separatem Griff bzw. Schutzrohr und Hand des Benutzers erzielt. Auf diese Weise wird dem Benutzer das winkelgerechte Ausrichten des Werkzeugkopfes 3 erleichtert.

In zumindest einem Griff 13 ist ein Bedienungselement für den Antrieb 2 vorgesehen. Der Antrieb 2 kann als Elektromotor, als Zweitaktmotor, als Viertaktmotor oder dgl. Antrieb ausgebildet sein.

Über eine in dem Schutzrohr 4 geführte Antriebswelle 10 wird das Werkzeug 7 vom Antrieb 2 angetrieben. Innerhalb des Schutzrohrs 4 ist die Antriebswelle 10 mittels eines Lagerrohrs 14 gelagert, so dass die Antriebswelle 10 das Antriebsmoment des Antriebs 2 laufruhig auf den Werkzeugkopf 3 übertragen kann.

Das Lagerrohr 14 erstreckt sich in Axialrichtung 15 des Schutzrohrs 4 zumindest über einen Teil dessen Länge. Vorzugsweise erstreckt sich das Lagerrohr 14 über die gesamte Länge des Schutzrohrs 4 von dessen einem Ende 5 zu dessen anderem Ende 6.

Es kann zweckmäßig sein, dass über die Länge des Schutzrohres 4 mehrere Lagerrohre 14 axial aufeinanderfolgen. Die aufsummierte Länge der aufeinanderfolgenden Abschnitte von Lagerrohren 14 beträgt vorteilhaft mindestens 60%, insbesondere mindestens 80 % der Länge des Schutzrohres 4. Zwischen den aufeinanderfolgenden Abschnitten von Lagerrohren 14 kann ein Abstand gebildet sein.

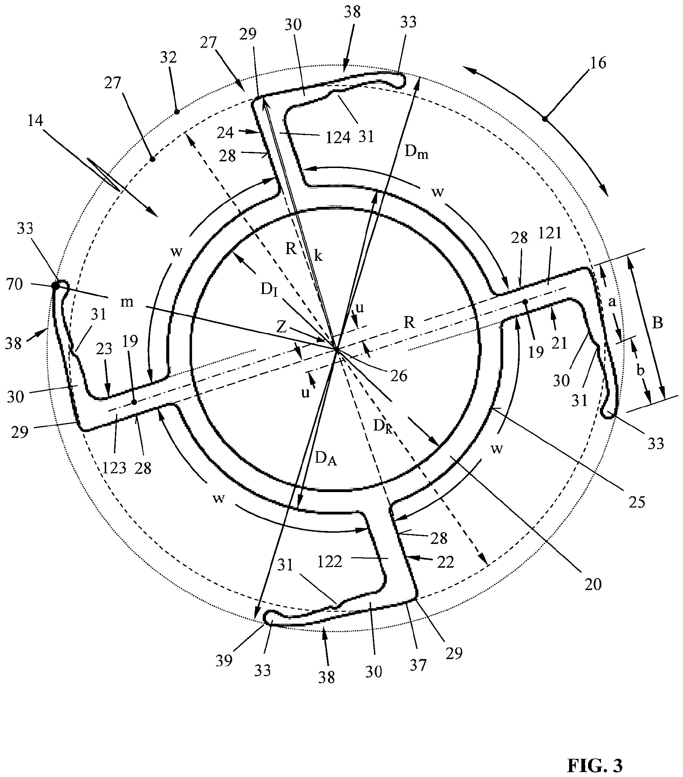

Ein Ausführungsbeispiel eines Lagerrohrs 14 ist in Fig. 3 dargestellt. Das Lagerrohr 14 besteht im Wesentlichen aus einer Lagerhülse 20, an deren Außenumfang 25 Stützelemente 21, 22, 23, 24 angeordnet sind. Im gezeigten Ausführungsbeispiel sind über den Außenumfang 25 verteilt vier Stützelemente vorgesehen; Ausführungsbeispiele mit mindestens zwei Stützelementen können zweckmäßig sein.

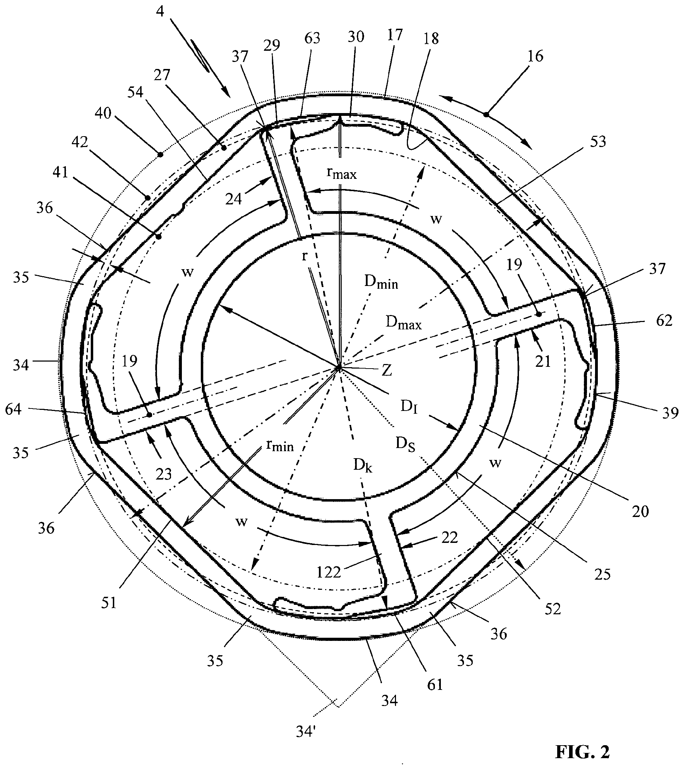

Die Stützelemente 21, 22, 23, 24 umfassen Stützrippen 121, 122, 123, 124, die Fortsätze aufweisen, die nachstehend als Laschen 30 bezeichnet sind. Im gezeigten Querschnitt nach den Figuren 2 bis 7 haben die Laschen 30 die Form eines an die Stützrippe 121, 122, 123, 124 angesetzten Fußes. Die Ferse des Fußes wird vom Längsrand 29 der Stützrippe 121, 122, 123, 124 gebildet, während der Mittelfuß mit einem freien vorderen Ende von dem freien Endabschnitt 38 der Lasche 30 gebildet ist.

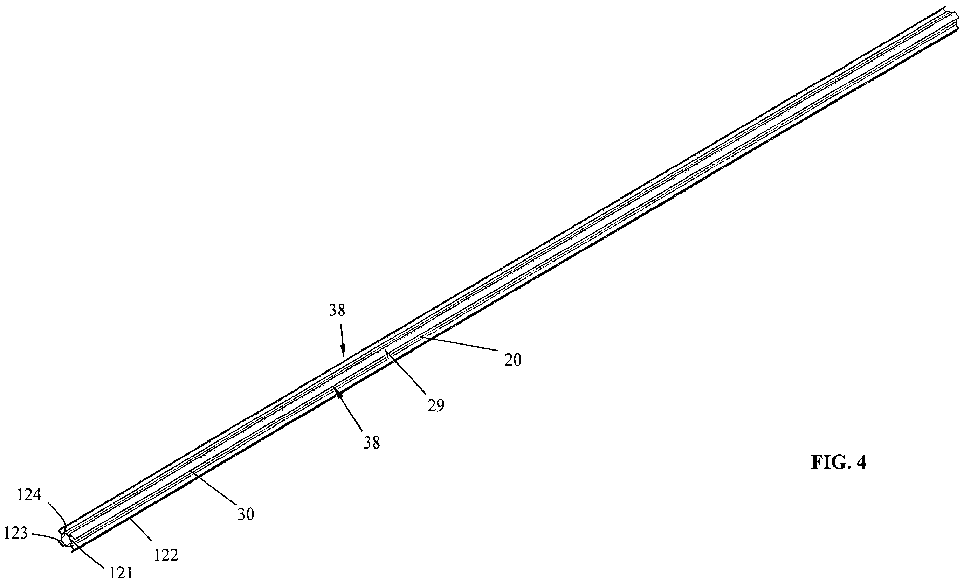

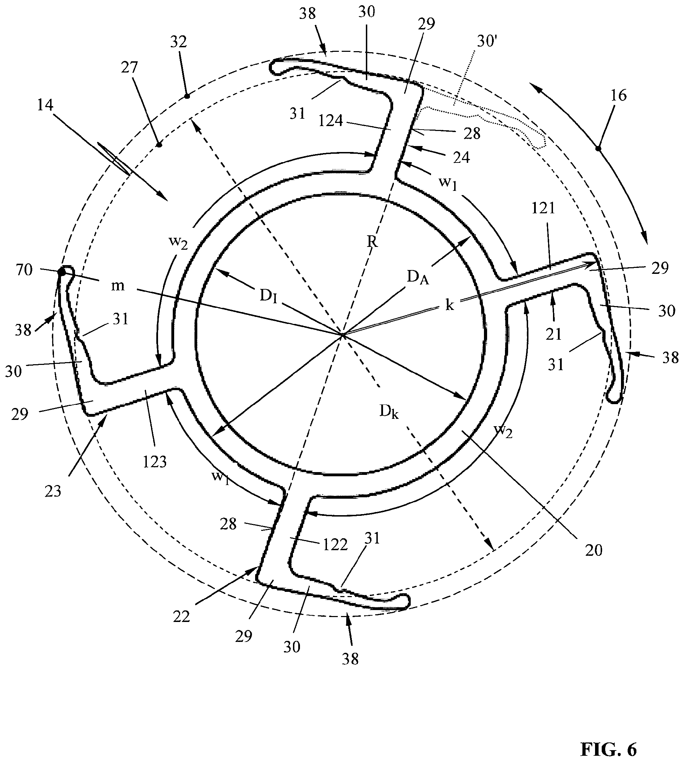

Wie die Figuren 4 und 6 zeigen, erstrecken sich die Stützrippen 121, 122, 123, 124 über die axiale Länge der Lagerhülse 20. Insbesondere erstrecken sich die Stützrippen 121, 122, 123, 124 über die gesamte axiale Länge der Lagerhülse 20. In gleicher Weise erstrecken sich die Laschen 30 über die axiale Länge einer Lagerhülse 20.

Es kann zweckmäßig sein, dass sich die Stützrippen 121, 122, 123, 124 nur abschnittsweise über die Länge der Lagerhülse 20 erstrecken. In gleicher Weise erstrecken sich die Laschen 30 über die gesamte axiale Länge oder über eine oder mehrere axiale Teillängen einer Lagerhülse 20. Die Lagerhülse 20 kann über ihre gesamte axiale Länge Stützelemente 21, 22, 23, 24 tragen oder nur partiell auf einer oder mehreren Teillängen. Auf diese Weise kann die Steifigkeit der Lagerung des Lagerrohres 14 im Schutzrohr 4 gezielt auf die lokal auftretenden Belastungen abgestimmt werden. Die Standzeit des Lagerrohres 14 kann erhöht werden. Eine nur partielle Anordnung von Stützelementen kann eine Material- und Gewichtsreduktion bewirken.

Im Ausführungsbeispiel nach Fig. 3 sind die Stützrippen 121, 122, 123, 124 mit im Bogenmaß gemessenen gleichen Winkelabständen w angeordnet. Die Stützrippen 121, 122, 123, 124 erstrecken sich etwa radial zur Lagerrohrachse 26, die in dem dargestellten Rohrquerschnitt das Zentrum Z des Querschnitts bildet. Zumindest zwei bezogen auf das Zentrum Z des Rohrquerschnitts einander etwa gegenüberliegende Stützrippen 121, 123 bzw. 122, 124 schließen an die Lagerhülse 20 an und erstrecken sich bis zu einem radial äußeren Längsrand 29, der einen Abstand k zum Zentrum Z der Lagerhülse 20 aufweist. Die radiale Erstreckung der Stützrippen 121, 123, 122, 124 ist derart vorgesehen, dass - im Querschnitt gesehen - jede Stützrippe 121, 122, 123, 124 an einem Durchmesserkreis 27 mit dem Durchmesser Dk endet. Im gezeigten Ausführungsbeispiel nach Fig. 3 enden alle Stützrippen 121, 122, 123, 124 an einem gemeinsamen Durchmesserkreis 27. Die Längsränder 29 der Stützrippen 121, 122, 123, 124 liegen - im Rohrquerschnitt gesehen - innerhalb einer durch den Durchmesserkreis 27 gegebenen Einhüllenden.

Die in Axialrichtung 15 der Lagerhülse 20 verlaufenden Längsseiten 28 einander gegenüberliegender Stützrippen 21, 23 bzw. 22, 24, die im Ausführungsbeispiel den Laschen 30 abgewandt liegen, liegen vorteilhaft in einer gemeinsamen Ebene. Diese Ebene verläuft - bezogen auf das Zentrum Z des Rohrquerschnitts - auf einer Radialen R durch das Zentrum Z bzw. durch die das Zentrum Z bildende Lagerrohrachse 26. Die Längsmittelebene 19 einer Stützrippe 121, 122, 123, 124 liegt mit einem seitlichen Abstand u zur Lagerrohrachse 26.

An dem freien Längsrand 29 einer Stützrippe 121, 122, 123, 124 ist eine Lasche 30 vorgesehen, die längs des Längsrandes 30 einer Stützrippe 121, 122, 123, 124 verläuft. Die Lasche 30 schließt seitlich an den freien Längsrand 29 einer Stützrippe 121, 122, 123, 124 an. Im Ausführungsbeispiel nach Fig. 3 erstreckt sich eine Lasche 30 in Umfangsrichtung 16 auf einer Seite der Stützrippe 121, 122, 123, 124 über eine Breite B.

Fig. 3 zeigt, dass die Laschen 30 bei demontiertem Schutzrohr über den Durchmesserkreis 27 der Stützrippen 121, 122, 123, 124 hinausragen. Die Laschen 30 enden an einem gemeinsamen äußeren Durchmesserkreis 32 mit einem äußeren Ausgangsdurchmesser Dₘ.

Die Lasche 30 schließt seitlich an den radial äußeren Längsrand 29 der Stützrippe 121, 122, 123, 124 an und erstreckt sich mit einer Breite B in Umfangsrichtung 16 der Lagerhülse 20. Die Lasche 30 weist einen äußeren Punkt 70 auf, der mit einem maximalen Abstand m zum Zentrum Z der Lagerhülse 20 liegt. Dieser Abstand m ist größer als der Abstand k des radial äußeren Längsrandes 29 der Stützrippe 121, 122, 123, 124 zum Zentrum Z der Lagerhülse 20.

Wie Fig. 3 zeigt, ragt die Lasche 30 über eine Teilbreite b über einen gemeinsamen Durchmesserkreis 27 mit dem Durchmesser Dₖ hinaus. Dabei besitzt die Lasche 30 auf ihrer dem Außenumfang 25 der Lagerhülse 20 zugewandten Seite eine Materialschwächung 31, die eine Biegestelle der Lasche 30 bildet. Um diese Biegestelle lässt sich die Teilbreite b der Lasche 30 derart elastisch nach innen abbiegen, dass vorteilhaft die gesamte Lasche 30 innerhalb des Durchmesserkreises 27 der Stützrippen 121, 122, 123, 124 liegt. Zweckmäßig lässt sich der Teilbereich b einer Lasche 30 von seinem Ausgangsdurchmesser Dₘ unter Aufbringung einer Vorspannkraft elastisch zumindest auf den durch die Biegestellen verlaufenden Durchmesser D_{B} zusammendrücken. Zur Montage in das Schutzrohr 4 werden die Laschen 30 elastisch verformt und federn somit nach der Montage, das heißt nach dem Einschieben des Lagerrohres 14 in das Schutzrohr 4, aufgrund ihrer Vorspannung elastisch gegen die Innenkontur des Schutzrohres 4.

Im Ausführungsbeispiel nach Fig. 3 erstrecken sich die Laschen 30 jeweils in gleicher Drehrichtung; die Laschen 30 weisen ausgehend vom Längsrand 29 einer Stützrippe 121, 122, 123, 124 alle in die gleiche Drehrichtung. Im Ausführungsbeispiel nach Fig. 3 erstrecken sich alle Laschen 30 im Uhrzeigersinn.

Wie Fig. 2 zeigt, hat das Schutzrohr 4 einen von der Kreisform abweichenden Rohrquerschnitt 17. Im Ausführungsbeispiel nach Fig. 2 ist ein eckiger Rohrquerschnitt 17 gezeigt; der Rohrquerschnitt 17 des Schutzrohrs 4 entspricht etwa einem Quadrat mit abgerundeten Ecken.

Der Rohrquerschnitt 17 hat eine Einhüllende 40 mit einem Durchmesser Ds.

Die Innenkontur 18 des Rohrquerschnittes 17 setzt sich aus ersten Umfangsabschnitten 51, 52, 53, 54 und zweiten Umfangsschnitten 61, 62, 63, 64 zusammen, die das Zentrum Z kreisförmig umgeben. Die ersten Umfangsabschnitte 51, 52, 53, 54 liegen mit einem kleinsten inneren Abstand rₘᵢₙ zum Zentrum Z des Rohrquerschnittes 17; die zweiten Umfangsabschnitte 61, 62, 63, 64 liegen mit einem größten Abstand rₘₐₓ zum Zentrum Z des Rohrquerschnittes 17.

Die Innenkontur 18 des Rohrquerschnitts 17 hat eine derartige Gestalt, dass ein erster, minimaler Innendurchmesser Dₘᵢₙ und ein zweiter, maximaler Innendurchmesser Dₘₐₓ gegeben ist. Der minimale Innendurchmesser Dₘᵢₙ definiert einen ersten Innenkreis 41, der die ersten Umfangsabschnitte 51, 52, 53, 54 der Innenkontur 18 berührt. Der maximale Innendurchmesser Dₘₐₓ definiert einen zweiten Innenkreis 42, der die zweiten Wandabschnitte 61, 62, 63, 64 berührt, die die gerundeten Ecken bzw. Längskanten 34 der Innenkontur 18 bilden.

Das Lagerrohr gemäß Fig. 3 ist in das Schutzrohr 4 gemäß Fig. 2 axial eingeschoben. Dabei liegt zumindest ein Stützelement 21, 22, 23, 24 der Lagerhülse 20 mit einer Anlagefläche 37, 39 an der Innenkontur 18 des Rohrquerschnitts 17 an. Eine erste an der Innenkontur 18 anliegende Anlagefläche 37 weist einen Abstand r zum Zentrum Z des Rohrquerschnittes 17 auf. Dieser Abstand r der ersten Anlagefläche 37 ist größer als der kleinste Abstand rₘᵢₙ der ersten Umfangsabschnitte 51, 52, 53, 54 zum Zentrum Z und kleiner oder gleich dem größten Abstand rₘₐₓ des zweiten Umfangsabschnitts 61, 62, 63, 64 zum Zentrum Z. Die erste Anlagefläche 37 befindet sich vorzugsweise zwischen einem minimalen Innendurchmesser Dₘᵢₙ und einem maximalen Innendurchmesser Dₘₐₓ der Innenkontur 18. Dabei ist ausdrücklich ausgeschlossen, dass sich die erste Anlagefläche 37 genau auf dem Innendurchmesser Dₘᵢₙ bzw. genau auf dem Innendurchmesser Dₘₐₓ befindet. Die Anordnung entspricht einer formschlüssigen Drehsicherung in Umfangsrichtung des Schutzrohres 4.

Eine zweite Anlagefläche 39 ist an der Lasche 30 ausgebildet. Die zweite Anlagefläche 39 liegt mit einem Abstand zum Zentrum Z, der dem maximalen Abstand rₘₐₓ des zweiten Umfangsabschnitts 61, 62, 63, 64 zum Zentrum entspricht.

Zweckmäßig liegt das Lagerrohr 14 mit der zweiten Anlagefläche 39 des Stützelementes 21, 22, 23, 24 im Bereich des zweiten Umfangsabschnitts 61, 62, 63, 64 an. Der zweite Umfangsabschnitt 61, 62, 63, 64 weist den größten Abstand rₘₐₓ zum Zentrum Z des Rohrquerschnitts 17 auf.

Der Durchmesser Dₖ des Durchmesserkreises 27 ist derart gewählt, dass er zwischen dem kleinsten Innendurchmesser Dₘᵢₙ und dem größten Innendurchmesser Dₘₐₓ der Innenkontur 18 des Rohrquerschnitts 17 des Schutzrohrs 4 liegt. Es kann zweckmäßig sein, den Durchmesser Dₖ des Durchmesserkreises 27 derart zu wählen, dass er dem größten Innendurchmesser Dₘₐₓ entspricht bzw. diesem angenähert ist.

Im Ausführungsbeispiel nach Fig. 2 liegen die Längsränder 29 der Stützrippen 121, 122, 123, 124 im Übergang 35 von einer Flachseite 36 zur gerundeten Längskante 34 an; die erste Anlagefläche 37 eines Stützelementes 21, 22, 23, 24 liegt im Anschlussbereich eines zweiten Umfangsabschnittes 61 zu einem ersten Umfangsabschnitt 52. Die Lasche 30 liegt zumindest teilweise an der Innenkontur 18 des Rohrquerschnitts 17 an. Vorzugsweise liegen die Laschen 30 zumindest teilweise in den gerundeten Längskanten 34 an der Innenkontur 18 der zweiten Umfangsabschnitte 61, 62, 63, 64 des Rohrquerschnitts 17 an. Im Ausführungsbeispiel nach Fig. 2 liegt die Lasche 30 im Wesentlichen über ihre gesamte Breite B an der gerundeten Längskante 34, also an einem zweiten Umfangsabschnitt 61, 62, 63, 64 an. Die zweite Anlagefläche 39 eines Stützelements 21, 22, 23, 24 liegt in einem zweiten Umfangsabschnitt 61 an.

Die erste Anlagefläche 37, die an dem Längsrand 29 einer Stützrippe 121, 122, 123, 124 vorgesehen ist, sowie die zweite Anlagefläche 39, die der radial äußeren Begrenzungskontur der Lasche 30 entspricht, erstrecken sich sowohl in Umfangsrichtung 16 der Innenkontur 18 als auch in Axialrichtung 15 des Schutzrohres 4. Dadurch sind flächige Anlagen möglich. Wird die Erstreckung einer Anlagefläche in Umfangsrichtung 16 kleiner oder zu Null, so kann sich eine Linienanlage der Anlagefläche ergeben.

Im Ausführungsbeispiel ist die Anlage der zweiten Anlagefläche 39 an der Innenkontur 18 - wie Fig. 2 zeigt - zumindest über einen Teilumfang, insbesondere über die Teilbreite b, flächig vorgesehen.

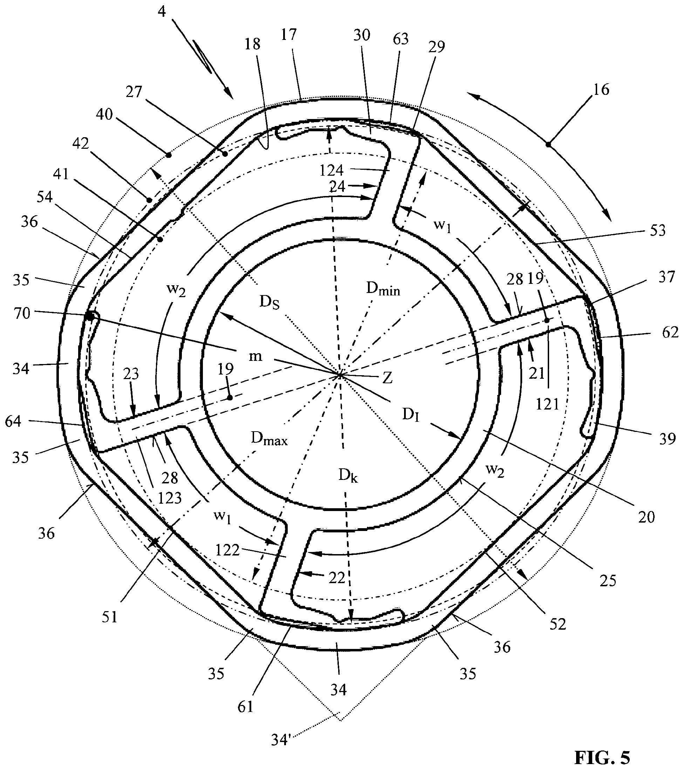

Im Ausführungsbeispiel nach den Figuren 5 bis 7 entspricht der grundsätzliche Aufbau dem nach den Figuren 2 bis 4, weshalb für gleiche Teile gleiche Bezugszeichen verwendet sind.

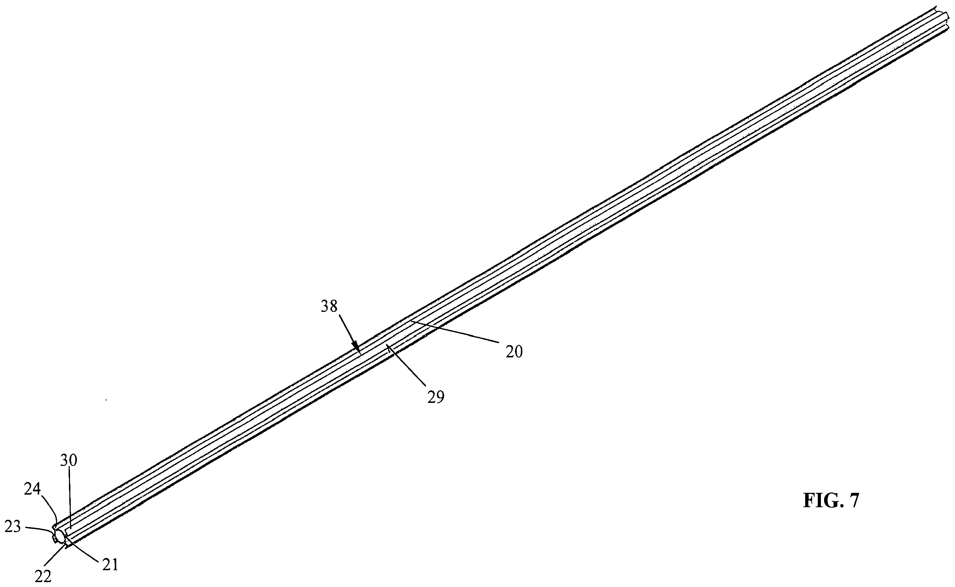

Bei dem Lagerrohr nach den Figuren 5 bis 7 sind die Stützrippen 121, 122, 123, 124 auf dem Außenumfang 25 der Lagerhülse 20 mit unterschiedlichen im Bogenmaß gemessenen Umfangsabständen w₁, w₂ angeordnet. Eine Stützrippe 121 hat zu einer der benachbarten Stützrippen 124 einen Umfangsabstand w₁ und zu der anderen in Umfangsrichtung benachbarten Stützrippe 122 einen Umfangswinkelabstand w₂. Die Laschen 30 der Stützrippen 121 und 122 mit einem größerem Winkelabstand sind aufeinander zu gerichtet; wie auch die isometrische Ansicht nach Fig. 7 zeigt. Im Querschnitt nach Fig. 6 wird deutlich, dass die Lasche 30 der Stützrippe 122 in Richtung auf die Stützrippe 121 zeigt; die Lasche 30 der Stützrippe 121 zeigt in Richtung auf die Stützrippe 122. Entsprechendes gilt für die Laschen der Stützrippen 123 und 124.

Die Anordnung der Stützrippen 121, 122, 123, 124 innerhalb der Innenkontur 18 des Rohrquerschnitts 17 ist wiederum so vorgesehen, dass eine Stützrippe 121, 122, 123, 124 auf der Höhe eines Übergangs 35 von einer Flachseite 36 in die gerundete Längskante 34 angeordnet ist. Eine Stützrippe 121, 122, 123, 124 liegt somit im Übergang von einem ersten Umfangsabschnitt 51, 52, 53, 54 in einen zweiten Umfangsabschnitt 61, 62, 63, 64. Die Lasche 30 erstreckt sich in Umfangsrichtung 16 über die gerundete Längskante 34, also einen zweiten Umfangsabschnitt 61, 62, 63, 64, wobei die Lasche 30 zumindest teilweise flächig an der Innenkontur 18 der gerundeten Längskante 34 anliegt.

In den Ausführungsbeispielen der Fig. 2 bis 7 sind die aus den Stützrippen 121, 122, 123, 124 und den Laschen 30 bestehenden Stützelemente 21, 22, 23, 24 im Querschnitt L-förmig ausgebildet. Es kann zweckmäßig sein, in Umfangsrichtung 16 auf beiden Seiten einer Stützrippe 121, 122, 123, 124 eine Lasche 30' anzuordnen, wie in Fig. 6 strichliert dargestellt ist. Damit wird im Querschnitt eine T-förmige Gestalt erzielt. Andere Querschnittsformen können zweckmäßig sein.

Eine Ausbildung eines Lagerrohrs 14 aus einer Lagerhülse 20 mit Stützelementen 21, 22, 23, 24, die gegengerichtete Laschen 30 aufweisen (Fig. 6), gewährleistet eine Verdrehsicherung durch Formschluss des Lagerrohrs 14 im Schutzrohr 4, der in beide Drehrichtungen bereits nach wenigen Grad Verdrehwinkel gegeben ist, was im Sinne der Erfindung als "harter" Anschlag bezeichnet werden kann. Sind alle Laschen 30 gleich ausgerichtet, ist in einer Verdrehrichtung ein sichernder Formschluss unmittelbar gegeben; der unmittelbare Formschluss wird als harter Anschlag bezeichnet. In die entgegengesetzte Verdrehrichtung erfolgt die Verdrehsicherung durch Anlage komprimierter Laschen 30 an einer Flachseite des Umfangsabschnittes 51, 52, 53, 54. Dieser Anschlag wird als weich bezeichnet. Eine für die Verdrehsicherung ausreichende Komprimierung der Laschen wird erst allmählich erreicht.

Bei der Verwendung eines Lagerrohres 14 mit in Umfangsrichtung gegengerichteten Laschen 30 (Fig. 5) muss bei der Montage in ein Schutzrohr 4 die Einschubrichtung des Lagerrohres 14 in das Schutzrohr 4 nicht beachtet werden; in beide Drehrichtungen ist eine "unverzögerte" Verdrehsicherung zwischen dem Lagerrohr 14 und dem Schutzrohr 4 gewährleistet.

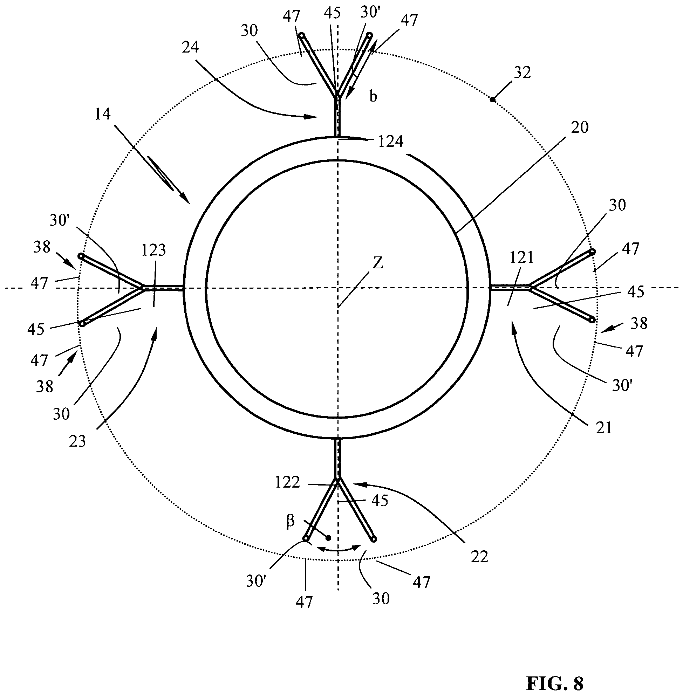

Wie die Ausführungsbeispiele der Fig. 8 bis 13 zeigen, können die Laschen 30, 30' mit ihrer äußeren Begrenzungskontur 47 radial über die Stützrippe 121, 122, 123, 124 vorstehen.

Insbesondere bei einem Querschnitt mit T-förmiger Gestalt kann stehen die Laschen 30, 30' mit ihrer äußeren Begrenzungskontur 47 radial über die Stützrippe 121, 122, 123, 124 hinaus, wie die Fig. 8 bis 10 zeigen. Die Laschen 30, 30' begrenzen einen Öffnungswinkel β, der eine Größe von 0 < β < 180° hat. Durch den Öffnungswinkel β ergibt sich im Querschnitt eine Y-förmige Gestalt, wie die Fig. 6 bis 9 wiedergeben.

Vorteilhaft weisen die Laschen 30, 30' eine geringere Steifigkeit auf als die Stützrippe 121, 122, 123, 124 selbst. Das freie Ende 38 jeder Lasche 30, 30' ist durch Aufbringung einer Kraft gegenüber der Stützrippe 121, 122, 123, 124 elastisch auszulenken, insbesondere begrenzt elastisch auslenkbar. Die Laschen 30, 30' lassen sich unter Aufbringung einer Vorspannkraft bzw. einer Maximalkraft nach innen in Richtung auf die Lagerhülse 20 drücken, wodurch ein "montagefähiger" bzw. "maximal ausgelenkter" Zustand erreicht ist.

Die elastische Verformbarkeit kann durch Ausbildung der Verbindungsstelle 45 von Stützrippe 121, 122, 123, 124 und Lasche 30, 30' und/oder durch entsprechende Eigenschaften der Lasche 30, 30' selbst erzielt werden, insbesondere durch deren Querschnittsform und durch Wahl eines geeigneten Materials. Die Laschen 30, 30' besitzen vorteilhaft einen flachen Querschnitt, wie die schematischen Darstellungen in den Fig. 7 bis 9 zeigen. Die Lasche 30, 30' kann auch gekrümmt und/oder abgewinkelt und/oder mit einer Materialschwächung 31 entsprechend Fig. 6 versehen sein.

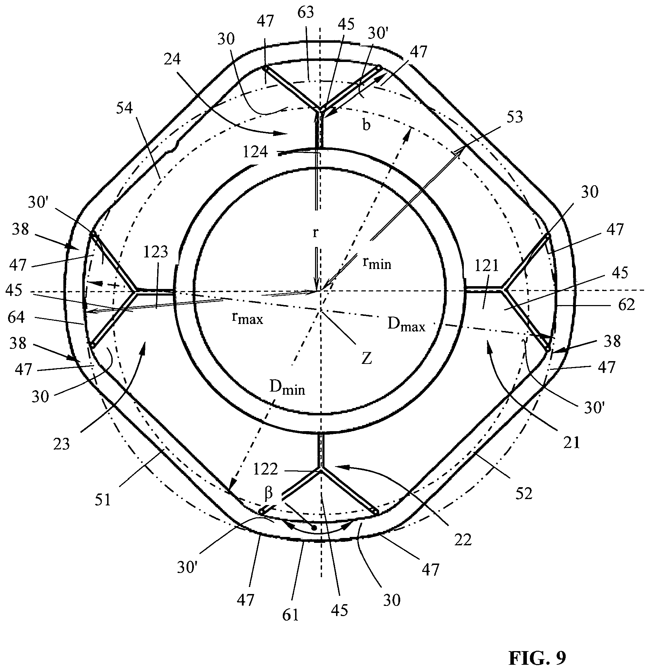

Im unverformten Zustand gemäß Fig. 8 ist der Durchmesserkreis 32 der Laschen 30, 30' größer als der maximale Innendurchmesser Dₘₐₓ des Schutzrohres 4. Im verformten, eingebauten Zustand nach Fig. 9 ist der Durchmesserkreis 32 der Laschen 30, 30' kleiner als der maximale Innendurchmesser Dₘₐₓ des Schutzrohres 4 und größer als der minimale Innendurchmesser Dₘᵢₙ des Schutzrohres 4.

Die Laschen 30, 30' legen sich zumindest teilweise an die Innenkontur 18 des Schutzrohres 4 an und üben aufgrund ihrer elastischen Verformung eine elastische Andruckkraft auf die Innenkontur 18 des Schutzrohres 4 aus.

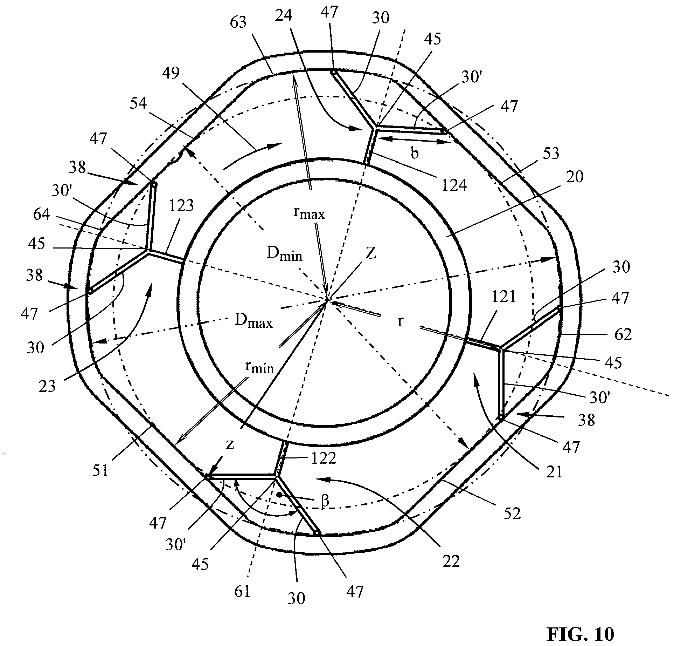

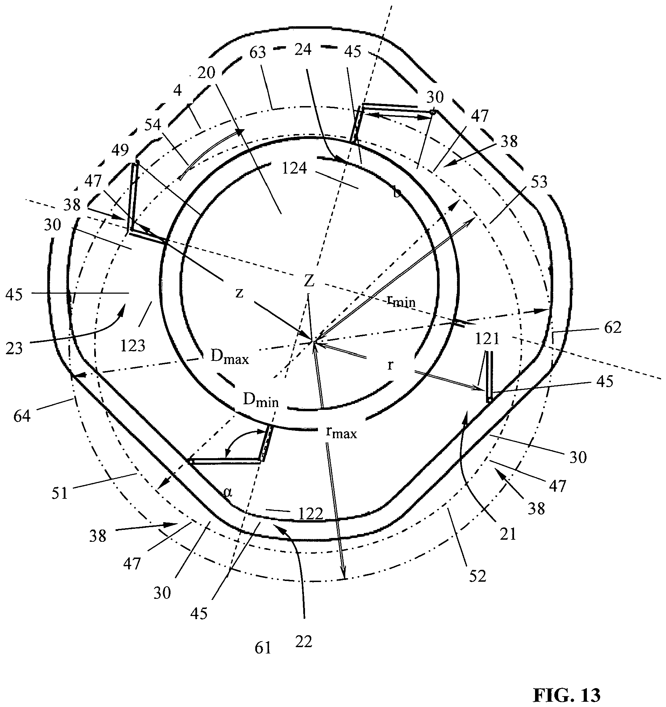

In einer derartigen Ausführungsform wird die Verdrehsicherung dadurch bewirkt, dass das freie Ende 38 der Laschen 30, 30' und/oder die radial außenliegende Begrenzungskontur 47 der Laschen 30, 30' an die Flachseite des ersten Umfangsabschnitts 51 des Rohrquerschnitts 17 anschlägt. Die elastische Verformbarkeit der Laschen 30, 30' ist derart eingestellt, dass die im Betrieb herrschende Drehkraft 49 die Laschen 30, 30' maximal bis zu einem "maximal ausgelenkten Zustand" auslenkt. In diesem Zustand ist der Abstand z (Figuren 10, 13) der äußersten Begrenzungskontur 47 der Lasche 30' zum Zentrum Z weiterhin größer als der minimale Innenradius rₘᵢₙ des Schutzrohres 4.

Auf diese Weise ist eine erste Abstützung einer Lasche 30 an einem ersten Umfangsabschnitt 51, 52, 53, 54 und eine zweite Abstützung einer Lasche 30' in einem zweiten Umfangsabschnitt 61, 62, 63, 64 bewirkt. Dadurch ist das Lagerrohr 14 im Schutzrohr 4 gegen Verdrehen gesichert. Das Lagerrohr 14 lässt sich leicht in das Schutzrohr 4 montieren. Auch bei größeren Fertigungstoleranzen ist eine Verdrehsicherung zuverlässig gesichert.

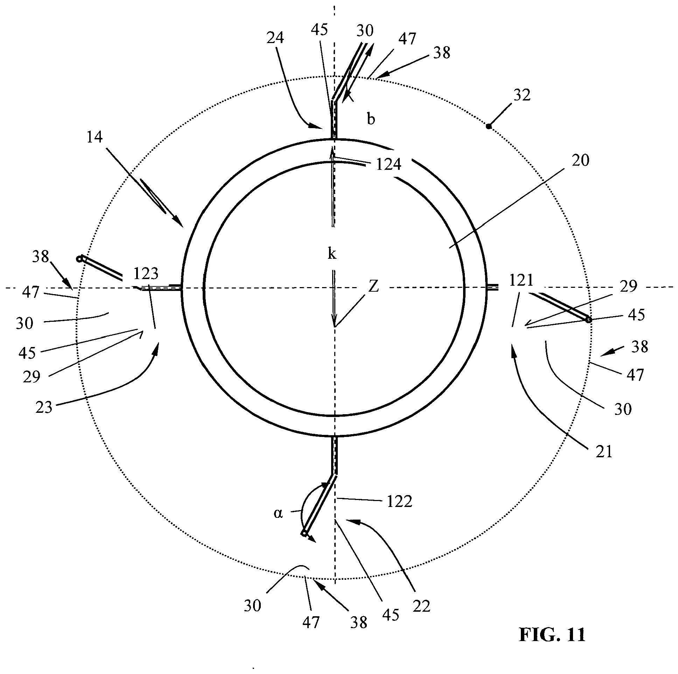

Im Ausführungsbeispiel nach den Figuren 11 bis 13 steht die Stützrippe 121, 122, 123, 124 von der Lagerhülse 20 ab, insbesondere radial ab. Die Stützrippe 121, 122, 123, 124 endet mit ihrem Längsrand 29 innerhalb des minimalen Innendurchmessers Dₘᵢₙ. Die Verbindungsstellen 45 der am Längsrand 29 anschließenden Laschen 30 liegen somit innerhalb des minimalen Innendurchmessers Dₘᵢₙ.

Die Lasche 30 begrenzt mit der Stützrippe 121, 122, 123, 124 einen Winkel α, der im Ausführungsbeispiel nach den Figuren 11 bis 13 zwischen 90° und 180° ist. Die Lasche 30 liegt somit schräg zur Stützrippe 121, 122, 123, 124. Im unbelasteten, unmontierten Zustand gemäß dem Querschnitt in Fig. 11 liegen die Begrenzungskonturen 47 der Laschen 30 auf einem Durchmesserkreis 32, dessen Durchmesser größer ist als der maximale Innendurchmesser Dₘₐₓ. Die Laschen 30 und/oder die Stützrippen 121, 122, 123, 124 sind zweckmäßig elastisch ausgebildet; durch Niederdrücken der Laschen 30 in Richtung auf die Lagerhülse 20 wird der Winkel α kleiner. Durch das Niederdrücken baut sich eine Spannkraft auf, die das Lagerrohr 14 im Schutzrohr 4 verspannt hält.

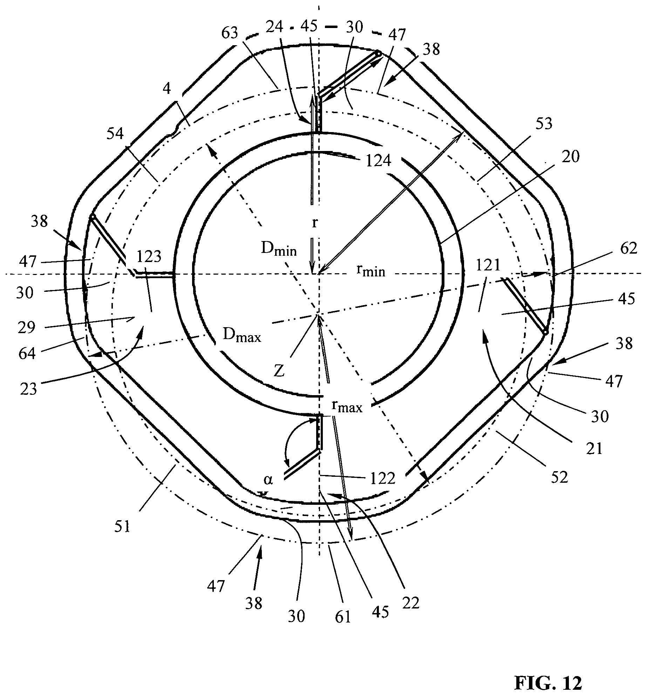

Wie Fig. 12 zeigt, liegen die Laschen 30 mit ihren freien Endabschnitten 38 an den gerundeten Umfangsabschnitten 61, 62, 63, 64 an. Die durch das Zusammendrücken aufgebrachte Spannkraft ist meist ausreichend, das Lagerrohr 14 gegen eine Drehmitnahme zu sichern.

In Fig. 13 wird von einer Drehkraft 49 auf die Lagerhülse 20 ausgegangen. Aufgrund der Drehkraft 49 werden die Begrenzungskonturen 47 vom maximalen Innendurchmesser Dₘₐₓ gemäß Fig. 12 auf den minimalen Innendurchmesser Dₘᵢₙ des Schutzrohres 4 verlagert. Dabei baut sich eine erhöhte Spannkraft auf, die das Lagerrohr 14 gegen die Drehkraft 49 abstützt.

Zu den verschiedenen Ausführungsbeispielen sind besondere Merkmale und Vorteile angegeben, die auch auf jeweils andere Ausführungsbeispiele übertragbar sind. Alle Merkmale und Vorteile der beschriebenen Ausführungsbeispiele sind untereinander austauschbar oder miteinander kombinierbar.

## Patentansprüche

1. Schutzrohr (4) mit einem inneren Lagerrohr (14) zur Lagerung einer Antriebswelle (10) eines handgeführten Arbeitsgerätes, wobei sich die Antriebswelle (10) und das Lagerrohr (14) in Längsrichtung (15) des Schutzrohres (4) erstrecken, und das Lagerrohr (14) eine zentrale Lagerhülse (20) aufweist, und die Lagerhülse (20) elastische Stützelemente (21, 22, 23, 24) trägt, und die Lagerhülse (20) durch die elastischen Stützelemente (21, 22, 23, 24) gegen die Innenkontur (18) des Schutzrohres (4) abgestützt ist, und zumindest ein Stützelement (21, 22, 23, 24) der Lagerhülse (20) mit einer Anlagefläche (37, 39) an der Innenkontur (18) des Rohrquerschnitts (17) anliegt, und das Stützelement (21, 22, 23, 24) eine sich längs der Lagerhülse (20) erstreckende Stützrippe (121, 122, 123, 124) umfasst, die einen als Lasche (30) ausgebildeten Fortsatz mit der Anlagefläche (39) aufweist, und die Anlagefläche (37, 39) einen Abstand (r) zum Zentrum (Z) des Rohrquerschnittes (17) aufweist, **dadurch gekennzeichnet,**
• **dass** das Schutzrohr (4) einen von einer Kreisform abweichenden Rohrquerschnitt (17) mit einer Innenkontur (18) und einem Zentrum (Z) aufweist,
• **dass** die Innenkontur (18) des Rohrquerschnittes (17) mindestens einen ersten Umfangsabschnitt (51, 52, 53, 54) mit einem kleinsten Abstand (rₘᵢₙ) zum Zentrum (Z) des Rohrquerschnittes (17) und mindestens einen zweiten Umfangsabschnitt (61, 62, 63, 64) mit einem größten Abstand (rₘₐₓ) zum Zentrum (Z) des Rohrquerschnittes (17) aufweist,
• und **dass** der Abstand (r) der Anlagefläche (37, 39) zum Zentrum (Z) größer ist als der kleinste Abstand (rₘᵢₙ) des ersten Umfangsabschnitts (51, 52, 53, 54) zum Zentrum (Z) und kleiner oder gleich ist des größten Abstands (rₘₐₓ) des zweiten Umfangsabschnitts (61, 62, 63, 64) zum Zentrum (Z).

2. Schutzrohr nach Anspruch 1,
**dadurch gekennzeichnet, dass** bezogen auf das Zentrum (Z) des Rohrquerschnitts (17) die Lagerhülse (20) zwei einander gegenüberliegende Stützelemente (21, 23; 22, 24) mit ersten Anlageflächen (37) aufweist, die einen gleichen Abstand (r) zum Zentrum (Z) des Rohrquerschnitts (17) aufweisen.

3. Schutzrohr nach Anspruch 1 oder 2,
**dadurch gekennzeichnet, dass** eine zweite Anlagefläche (39) des Stützelementes (21, 22, 23, 24) im Bereich des zweiten Umfangsabschnitts (61, 62, 63, 64) anliegt, der den größten Abstand (rₘₐₓ) zum Zentrum (Z) des Rohrquerschnitts (17) aufweist.

4. Schutzrohr nach einem der Ansprüche 1 bis 3,
**dadurch gekennzeichnet, dass** das Schutzrohr (4) einen eckigen Rohrquerschnitt (17) mit sich in Axialrichtung (15) erstreckenden Längskanten (34) aufweist, die mit einem Radius (S) gerundet sind.

5. Schutzrohr nach einem der Ansprüche 1 bis 4,
**dadurch gekennzeichnet, dass** die an dem freien Längsrand (29) der Stützrippe (121, 122, 123, 124) seitlich anschließende Lasche (30) eine sich in Umfangsrichtung (16) der Lagerhülse (20) erstreckende Breite (B) aufweist.

6. Schutzrohr nach Anspruch 5,
**dadurch gekennzeichnet, dass** sich die Lasche (30) über die axiale Länge der Stützrippe (121, 122, 123, 124) erstreckt.

7. Schutzrohr nach einem der Ansprüche 5 oder 6,
**dadurch gekennzeichnet, dass** die sich in Umfangsrichtung (16) erstreckenden Laschen (30) zumindest zweier Stützrippen (212, 122; 123, 124) in eine gleiche Drehrichtung weisen.

8. Schutzrohr nach einem der Ansprüche 5 bis 7,
**dadurch gekennzeichnet, dass** zumindest zwei einander benachbarte Stützrippen (121, 122; 123, 124) Laschen (30) aufweisen, die in Umfangsrichtung (16) einander zugewandt sind.

9. Schutzrohr nach einem der Ansprüche 5 bis 8,
**dadurch gekennzeichnet, dass** die Lasche (30) einer Stützrippe (121, 122, 123, 124) unter Vorspannung an der Innenkontur (18) des Rohrquerschnitts (17) anliegt.

10. Schutzrohr nach einem der Ansprüche 5 bis 9,
**dadurch gekennzeichnet, dass** die Lasche (30) zumindest teilweise flächig in einer gerundeten Längskante (34) der Innenkontur (18) anliegt.

11. Schutzrohr nach einem der Ansprüche 5 bis 10,
**dadurch gekennzeichnet, dass** die an der Innenkontur (18) anliegende Anlagefläche (37, 39) des Stützelementes (21, 22, 23, 24) an dem freien Längsrand (29) der Stützrippe (121, 122, 123, 124) und/oder an dem freien Längsrand (33) der Lasche (30) ausgebildet ist.

12. Schutzrohr nach einem der Ansprüche 5 bis 11,
**dadurch gekennzeichnet, dass** die Längsmittelachse (26) der Lagerhülse (20) mit seitlichem Abstand (u) zu einer Längsmittelebene (19) der Stützrippe (121, 122, 123, 124) liegt.

13. Schutzrohr nach einem der Ansprüche 1 bis 12,
**dadurch gekennzeichnet, dass** die über den Umfang einander benachbarten Stützelemente (21, 22, 23, 24) mit unterschiedlichen Winkelabständen (w₁, w₂) zueinander liegen.

## Claims

1. Protective tube (4) with an internal bearing tube (14) for mounting a drive shaft (10) of a hand-guided working implement, wherein the drive shaft (10) and the bearing tube (14) extend in the longitudinal direction (15) of the protective tube (4) and the bearing tube (14) has a central bearing sleeve (20) and the bearing sleeve (20) supports elastic supporting elements (21, 22, 23, 24) and the bearing sleeve (20) is supported against the internal contour (18) of the protective tube (4) by the elastic supporting elements (21, 22, 23, 24) and at least one supporting element (21, 22, 23, 24) of the bearing sleeve (20) bears against the internal contour (18) of the tube cross-section (17) with a contact surface (37, 39) and the supporting element (21, 22, 23, 24) comprises a supporting rib (121, 122, 123, 124), which extends along the bearing sleeve (20) and has an extension designed as a lug (30) with the contact surface (37, 39) and the contact surface (37, 39) has a distance (r) from the centre (Z) of the tube cross-section (17),
**characterised in that**
• the protective tube (4) has a tube cross-section (17) deviating from a circular form with an internal contour (18) and a centre (Z),
• the internal contour (18) of the tube cross-section (17) has at least one first circumferential section (51, 52, 53, 54) with a minimum distance (rₘᵢₙ) from the centre (Z) of the tube cross-section (17) and at least one second circumferential section (61, 62, 63, 64) with a maximum distance (rₘₐₓ) from the centre (Z) of the tube cross-section (17),
• and the distance (r) of the contact surface (37, 39) from the centre (Z) is greater than the minimum distance (rₘᵢₙ) of the first circumferential section (51, 52, 53, 54) from the centre (Z) and less than or equal to the maximum distance (rₘₐₓ) of the second circumferential section (61, 62, 63, 64) from the centre (Z).

2. Protective tube according to claim 1,
**characterised in that**, with respect to the centre (Z) of the tube cross-section (17), the bearing sleeve (20) has two oppositely located supporting elements (21, 23; 22, 24) with first contact surfaces (37) having an identical distance (r) from the centre (Z) of the tube cross-section (17).

3. Protective tube according to claim 1 or 2,
**characterised in that** a second contact surface (39) of the supporting element (21, 22, 23, 24) lies **in that** region of the second circumferential section (61, 62, 63, 64) which has the maximum distance (rₘₐₓ) from the centre (Z) of the tube cross-section (17).

4. Protective tube according to any of claims 1 to 3,
**characterised in that** the protective tube (4) has an angular tube cross-section (17) with longitudinal edges (34), which extend in the axial direction (15) and are rounded with a radius (S).

5. Protective tube according to any of claims 1 to 4,
**characterised in that** the lug (30) laterally adjoining the free longitudinal edge (29) of the supporting rib (121, 122, 123, 124) has a width (B) extending in the circumferential direction (16) of the bearing sleeve (20).

6. Protective tube according to claim 5,
**characterised in that** the lug (30) extends along the axial length of the supporting rib (121, 122, 123, 124).

7. Protective tube according to claim 5 or 6,
**characterised in that** the lugs (30) extending in the circumferential direction (16) of at least two supporting ribs (121, 122, 123, 124) point in an identical direction of rotation.

8. Protective tube according to any of claims 5 to 7,
**characterised in that** at least two adjacent supporting ribs (121, 122, 123, 124) have lugs (30) facing one another in the circumferential direction (16).

9. Protective tube according to any of claims 5 to 8,
**characterised in that** the lug (30) of a supporting rib (121, 122, 123, 124) bears against the internal contour (18) of the tube cross-section (17) under preload.

10. Protective tube according to any of claims 5 to 9,
**characterised in that** the lug (30) is at least partially in surface contact with a rounded longitudinal edge (34) of the internal contour (18).

11. Protective tube according to any of claims 5 to 10,
**characterised in that** the contact surface (37, 39) of the supporting element (21, 22, 23, 24) which bears against the internal contour (18) is formed at the free longitudinal edge (29) of the supporting rib (121, 122, 123, 124) and/or at the free longitudinal edge (33) of the lug (30).

12. Protective tube according to any of claims 5 to 11,
**characterised in that** the longitudinal central axis (26) of the bearing sleeve (20) has a lateral distance (u) from a longitudinal central plane (19) of the supporting rib (121, 122, 123, 124).

13. Protective tube according to any of claims 1 to 12,
**characterised in that** the supporting elements (21, 22, 23, 24) which are adjacent to one another along the circumference have different angular distances (w₁, w₂) from one another.

## Revendications

1. Tube de protection (4) avec un tube de montage intérieur (14) pour le montage d'un arbre d'entraînement (10) d'un appareil de travail à main, dans lequel l'arbre d'entraînement (10) et le tube de montage (14) s'étendent dans la direction longitudinale (15) du tube de protection (4), et le tube de montage (14) comporte une gaine de montage centrale (20), et la gaine de montage (20) porte des éléments d'appui élastiques (21, 22, 23, 24), et la gaine de montage (20) est en appui par les éléments d'appui élastiques (21, 22, 23, 24) contre le contour intérieur (18) du tube de protection (4), et au moins un élément d'appui (21, 22, 23, 24) de la gaine de montage (20) est appliqué avec une surface d'application (37, 39) contre le contour intérieur (18) de la section transversale de tube (17), et l'élément d'appui (21, 22, 23, 24) comprend une nervure d'appui (121, 122, 123, 124) qui s'étend le long de la gaine de montage (20) et qui comporte un prolongement, formé comme une patte (30), avec la surface d'application (39), et la surface d'application (37, 39) présente une distance (r) par rapport au centre (Z) de la section transversale de tube (17),
**caractérisé**
• **en ce que** le tube de protection (4) comporte une section transversale de tube (17) différente d'une forme circulaire, avec un contour intérieur (18) et un centre (Z),
• **en ce que** le contour intérieur (18) de la section transversale de tube (17) comporte au moins une première section circonférentielle (51, 52, 53, 54) avec une distance minimale (rₘᵢₙ) par rapport au centre (Z) de la section transversale de tube (17), et au moins une deuxième section circonférentielle (61, 62, 63, 64) avec une distance maximale (rₘₐₓ) par rapport au centre (Z) de la section transversale de tube (17),
• et **en ce que** la distance (r) de la surface d'application (37, 39) par rapport au centre (Z) est supérieure à la distance minimale (rₘᵢₙ) de la première section circonférentielle (51, 52, 53, 54) par rapport au centre (Z), et inférieure ou égale à la distance maximale (rₘₐₓ) de la deuxième section circonférentielle (61, 62, 63, 64) par rapport au centre (Z).

2. Tube de protection selon la revendication 1,
**caractérisé en ce que** par rapport au centre (Z) de la section transversale de tube (17), la gaine de montage (20) comporte deux éléments d'appui opposés (21, 23; 22, 24) avec des premières surfaces d'application (37) qui présentent une même distance (r) par rapport au centre (Z) de la section transversale de tube (17).

3. Tube de protection selon la revendication 1 ou 2,
**caractérisé en ce qu'**une deuxième surface d'application (39) de l'élément d'appui (21, 22, 23, 24) est appliquée dans la zone de la deuxième section circonférentielle (61, 62, 63, 64) qui présente la distance maximale (rₘₐₓ) par rapport au centre (Z) de la section transversale de tube (17).

4. Tube de protection selon l'une des revendications 1 à 3,
**caractérisé en ce que** le tube de protection (4) présente une section transversale de tube (17) angulaire, avec des arêtes longitudinales (34) qui s'étendent dans la direction axiale (15) et qui sont arrondies avec un rayon (S).

5. Tube de protection selon l'une des revendications 1 à 4,
**caractérisé en ce que** la patte (30) qui fait suite latéralement au bord longitudinal libre (29) de la nervure d'appui (121, 122, 123, 124) présente une largeur (B) qui s'étend dans la direction circonférentielle (16) de la gaine de montage (20).

6. Tube de protection selon la revendication 5,
**caractérisé en ce que** la patte (30) s'étend sur la longueur axiale de la nervure d'appui (121, 122, 123, 124).

7. Tube de protection selon l'une des revendications 5 ou 6,
**caractérisé en ce que** les pattes (30) d'au moins deux nervures d'appui (212, 122; 123, 124) qui s'étendent dans la direction circonférentielle (16) sont dirigées dans une même direction de rotation.

8. Tube de protection selon l'une des revendications 5 à 7,
**caractérisé en ce qu'**au moins deux nervures d'appui voisines (121, 122; 123, 124) comportent des pattes (30) qui sont tournées l'une vers l'autre dans la direction circonférentielle (16).

9. Tube de protection selon l'une des revendications 5 à 8,
**caractérisé en ce que** la patte (30) d'une nervure d'appui (121, 122, 123, 124) est appliquée contre le contour intérieur (18) de la section transversale de tube (17) en étant précontrainte.

10. Tube de protection selon l'une des revendications 5 à 9,
**caractérisé en ce que** la patte (30) est appliquée au moins partiellement à plat dans une arête longitudinale arrondie (34) du contour intérieur (18).

11. Tube de protection selon l'une des revendications 5 à 10,
**caractérisé en ce que** la surface d'application (37, 39) de l'élément d'appui (21, 22, 23, 24) appliquée contre le contour intérieur (18) est formée sur le bord longitudinal libre (29) de la nervure d'appui (121, 122, 123, 124) et/ou sur le bord longitudinal libre (33) de la patte (30).

12. Tube de protection selon l'une des revendications 5 à 11,
**caractérisé en ce que** l'axe longitudinal médian (26) de la gaine de montage (20) se trouve à une distance latérale (u) d'un plan longitudinal médian (19) de la nervure d'appui (121, 122, 123, 124).

13. Tube de protection selon l'une des revendications 1 à 12,
**caractérisé en ce que** les éléments d'appui (21, 22, 23, 24) voisins sur la circonférence se trouvent à différentes distances angulaires (w₁, w₂) les uns des autres.
